# EUROPEAN PATENT APPLICATION

(11) **EP 0 801 039 A2**
(43) Date of publication of application: **15.10.1997**
(21) Application number: 97105944.9
(22) Date of filing: 10.04.1997
(51) Int. Cl.: C03B 37/04, C03B 37/05, C03B 37/075, C03C 25/02, D01D 5/18, D01D 11/06

(54) **Mineral fiber product and process and device for producing it**

(30) Priority: 12.04.1996 DE 19614572
(71) Applicant: ISOVER SAINT-GOBAIN, F-92400 Courbevoie (FR)
(72) Inventor: Aube, Jean-Yves, 60600 Clermont (FR)
(74) Representative: KUHNEN, WACKER & PARTNER

(57) **Abstract**

The present invention proposes a method for producing mineral fibers, wherein a first mineral molten material (8) is supplied to a first spinner (2) having a multiplicity of orifices (6) provided in its peripheral wall (4), is centrifuged thereby and subjected to an attenuating effect of a hot gas flow (12) generated by an external annular burner (10). A second mineral molten material (18) is applied from the outside onto the external surface (20) of the peripheral wall (4) of the first spinner (2) such that bicomponent fibers (14) made up of both molten materials can be produced. The present invention furthermore provides a device for fiberising mineral molten materials in order to produce mineral fiber products by means of a first spinner (2), an annular external burner (10) arranged coaxially with and preferably above the spinner (2), and a means (16) for applying a second mineral molten material (18) onto the external surface (20) of the peripheral wall (4) of the spinner (2).

## Description

The present invention concerns a method for producing mineral fibers in accordance with the preamble of claim 1, a device for fiberising mineral molten materials for producing mineral wool products in accordance with the preamble of claim 7, the mineral fiber produced by the method, and the mineral wool product obtained therefrom.

Conventional methods and devices have hitherto been used to obtain mineral wool products consisting of mineral fibers from a single molten material (cf. U.S.-A-4,203,774 or U.S.-A-4,203,748). In accordance with the so-called TEL technique, i.e. the internal rotary process with attenuating blast, this single mineral molten material is supplied to the spinner of a fiberising unit comprising in its peripheral wall a multiplicity of orifices, and centrifuged. In such fiberising units, the centrifuged molten material is, as a general rule, subjected to the supplementary attenuating effect of a gas flow usually generated by an annular burner such as disclosed e.g. in WO 93/02977. The further development of such a device was, for example, directed at permitting increasingly high working temperatures. Such high-performance fiberising units are disclosed e.g. in EP 0 583 791 A1 or in EP 0 583 792 A1.

Even though the mineral fibers produced by the described methods and the mineral wool products obtained thereby already have good thermal insulation properties, such usual methods and devices are not suited for producing fibers from two different molten materials.

A method and a device for producing bicomponent fibers are already known from U.S.-A-2,998,620. The method used is the TEL technique, however two mineral molten materials of different compositions and different coefficients of thermal expansion are fed to the spinner. Streams of either molten material flow through a common port to thus enter into surface contact with each other. The dual stream of molten material thus produced is centrifuged into a single filament and subsequently subjected to the attenuating effect of a gas flow. Thereby a bicomponent fiber is obtained from two different mineral molten materials whose different coefficients of thermal expansion result in a curling effect upon cooling, such that this bicomponent fiber has the basic but irregular shape of a helically wound thread following solidification.

Another device and method, respectively, is known from WO 95/12700. The spinner described there comprises compartments arranged in sections on the inside of the peripheral wall for separate channelling of the two molten materials, with two adjacent compartments, which are separated by a baffle and contain different molten materials, being associated with a common orifice having a slit-shaped configuration and located in the boundary area of these two compartments, wherethrough the two different molten materials can also be brought into surface contact and centrifuged. A similar device is moreover known from WO 95/29881 wherein the orifices have a "Y" or "V" configuration, respectively. By such devices bicomponent fibers can also be produced from two laterally adjacent layers of different molten materials.

Producing such bicomponent fibers from two different molten materials by means of the described methods or by means of the hitherto known devices is still extremely expensive because of the high production costs for suitable fiberising units, as a result e.g. of complex orifice geometry, complicated channelling of the molten materials, and the associated expensive construction of the spinner. The throughput of molten material and thus the productivity of these fiberising units is furthermore low. As a consequence, the output of finished mineral wool products obtainable by such an installation is small, with its operation being comparatively costly. The two molten materials can only be brought into surface contact by means of such devices, such that only bicomponent fibers constituted of layers of the two molten materials in lateral contact can be produced.

Owing to the irregular curling of such bicomponent fibers, improved homogeneity of the fiber distribution and of the empty spaces defined between them can be obtained. The thermal and mechanical properties achieved thereby can, however, be influenced only to a very limited extent - if at all - to adapt them to the requirements of a specific instance.

The present invention therefore has the object of proposing a method and furnishing a device whereby multiple-component or bicomponent fibers made up of at least two molten materials may be produced, targeting a clearly increased throughput of mineral molten material in order to enable mineral fiber output in quantities resembling those of conventional fiberising units.

This object is achieved by the characterising features of claim 1.

By applying a second mineral molten material from the outside onto the external surface of the peripheral wall of the spinner, a conventional spinner can be made use of in the production of bicomponent fibers made up of at least two molten materials to centrifuge the first molten material supplied to this spinner. Thereby the additional constructional expense may be reduced to providing means for applying the second mineral molten material onto the external surface of the peripheral wall of the spinner. Already existing fiberising units, previously used for producing standard mineral fibers, may thus in a given case be adapted without major expenditure by simply converting them into fiberising units for producing bicomponent fibers made up of at least two mineral molten materials. This furthermore has the advantage of the known spinners already having a very large orifice density and consequently a high throughput of molten material.

Although it was to be expected that the second molten material applied from the outside would immediately be thrown back or rebound from the peripheral wall of the first spinner due to the high centrifugal acceleration of the latter, it was surprisingly found that the second molten material applied from the outside spreads relatively homogeneously on the outer surface of the peripheral wall of the first spinner while constituting a layer or film of molten material. Hereby the basic prerequisite for the concurrent presence of two molten materials for forming a bicomponent fiber has been created without both of the molten materials having to be fed into the spinner. Complex geometries for initially channeling or keeping the two molten materials separately inside the spinner are thus not necessary. Common openings for bringing the two molten materials into surface contact and centrifuging them are not necessary.

Neither could the second molten material be anticipated to penetrate as far as the spinner surface from the outside: the velocity of the gas flow to be used for obtaining a good attenuation effect is at least sufficiently high to justify the assumption that a molten material flow would experience a strong deflection and would not be capable of arriving at intended locations of the peripheral wall external surface. Here as well, however, it was surprisingly found that the inertia of the particle flow of the second molten material at a corresponding flow velocity allows directed application of the second molten material from the outside onto the peripheral wall of the spinner.

In the context of the present invention, 'mineral molten materials' are meant to signify any fiberisable vitreous materials from the known traditional glasses through basalts and slags to rock melts. The invention should furthermore be understood to be applicable to any thermoplastic fiberisable materials and thermoplastic fibers such as e.g. polymer materials as well as polyester or polypropylene fibers.

It is another advantage that one of the two molten materials may, for example, be stained whereby the obtained bicomponent fiber can be given any desired coloring. The one molten material may furthermore be optimised with respect to the mechanical and thermal properties for increasing stability and improving insulating properties, whereas the second fiber may be chosen for example under the aspect of physiological compatibility or other health-related aspects.

Fiberising conditions can be optimised largely separately for both molten materials, whereby optimising the devices against wear is possible. Wear may additionally be reduced as branches or bends, which might be eroded by the molten material as a result of corrosion, do not occur in flow channelling. Hereby a cross-section of orifices remaining constant over the entire service life of the device is furthermore guaranteed, and the service life of the spinner can be distinctly increased.

If, in accordance with claim 2, application of the second molten material is effected from the outside by centrifuging or spinning off, then a second known spinner e.g. having the form of a so-called external spinner or spinner wheel can advantageously be made use of. Such spinners are, for example, commonly used rotors for fiberising rock wool. The use of particularly hard glasses as the second molten material is thus in addition readily possible in the method of the invention. As the first molten material, one may then use a so-called soft glass, the low chemical aggressivity and relatively low melting point of which allow to keep the requirements to corrosion and heat resistance of the first spinner low. Hereby it is advantageously possible to use conventional internal fiberising wheels for the first spinner, resulting in a further reduction of costs.

If the first molten material upon emerging from the orifices as a result of centrifugation is conveyed, in accordance with claim 3, such as to penetrate through the layer of second molten material present on the outer surface of the peripheral wall, then particularly advantageous bicomponent fibers can be produced. Other than the known bicomponent fibers comprising layers of the two molten materials in juxtaposition, i.e. constituted of juxtaposed partial surfaces of identical or different surface ratios in cross-sectional view, these bicomponent fibers advantageously comprise a core consisting of the first molten material and a coating of the second molten material. Hereby it is possible for example to produce particularly corrosion-resistant and yet flexible bicomponent fibers. Their external coating of a hard glass can then be extremely resistant against external chemical and mechanical influences, e.g. thermal ones, and their inner core e.g. produced of a soft glass can exhibit high elasticity, whereby high flexibility of the bicomponent fiber can be achieved in addition to the high corrosion resistance. For the coating of the bicomponent fiber, molten materials having particularly good physiological compatibility are furthermore imaginable. It might even be envisaged to create the coating or the core, respectively, of the bicomponent fiber from a colored molten material in order to achieve special optical effects. Upon corresponding selection of molten optical glass materials, manufacture of light waveguides might even be envisioned. Producing electrically conductive bicomponent fibers which are isolated with respect to the environment similarly to the known electrical conductors should even be possible if a corresponding conductive molten material for the core and a molten material having a high electrical resistance for the coating is selected.

In accordance with claim 4, the first molten material upon emerging from the orifices is conveyed such as not to be impeded by the second molten material and to be brought into contact with the second molten material only at a distance from the orifice. Formation of the fiber trunk or fiber cone on the basis of the first molten material is thereby further improved, and the process of bringing it into contact with the second molten material can be varied. Thus any varieties from complete coating over partial coating to an arrangement of two layers having any desired cross-sectional proportion in juxtaposition are possible. Coating or combining the first molten material with the second one may involve a time delay. This is advantageous if, for example, the two molten materials have extremely different melting points or viscosities, such that a delay is desirable for the purpose of assimilation when bringing the two molten materials into contact with each other.

In accordance with claim 5, a soft glass or a glass such as an E-glass may be used as a first molten material, and a hard glass or a rock such as basalt may be used as a second molten material in accordance with claim 6. It is equally conceivable for the two molten materials being produced from soft glasses and/or hard glasses, respectively, to have very similar or very different physical properties depending on the requirements of use.

Such different physical properties are for example different coefficients of thermal expansion, different melting points, different viscosities, different tensile strengths or different modules of elasticity. Thus it is imaginable to stain one of the glasses in order to give a desired coloring to the bicomponent fiber. A glass having an optimally suited viscosity for internal fiberisation may be chosen as the first glass in order to keep spinner wear due to abrasive corrosion as low as possible.

In terms of device technology, this object is attained by the characterising features of claim 7.

The device of the invention comprises a first spinner having a multiplicity of orifices with small diameters provided in its peripheral wall. A mineral molten material supplied to the spinner is centrifuged through these orifices and subseqently subjected to the attenuating effect of a hot gas flow generated by an annular external burner which is in coaxial arrangement, preferably above the spinner. Furthermore a means for applying a second mineral molten material onto the external surface of the peripheral wall of the spinner is provided.

Thus it is for the first time advantageously possible to entirely separate conditioning and channelling of the two molten materials in the device of the invention. The first molten material is supplied to the spinner in a known manner and centrifuged through it. The second molten material, on the other hand, can be supplied to the means for application onto the external surface of the peripheral wall of the first spinner. From there it is then applied onto the external surface of the peripheral wall of the first spinner.

If, now, different glasses are to be used for producing the bicomponent fiber, the "more compatible" one of the molten materials may be supplied to the spinner and the "more aggressive" one applied onto the external surface via the above mentioned means to thereby avoid or reduce wear.

In accordance with claim 8, the means for applying the second mineral molten material onto the external surface of the peripheral wall of the first spinner has the form of at least one more, preferably annular spinner. It is arranged in a lateral position with respect to the first spinner to enable centrifuging the second mineral molten material from outside onto the external surface of the peripheral wall of the first spinner. In this way, known external fiberising wheels as e.g. those used for producing rock wool may be utilised. This in turn helps to reduce wear of the components of the device of the invention. Production and operating costs of such a device having quasi-modular structure may moreover be lowered distinctly by using known internal and external fiberising organs.

In accordance with claim 9, a plurality of additional, preferably annular spinners are positioned in circular arrangement around the first spinner, preferably at equal distances from each other. The rotation axes of these further spinners, which may e.g. be spinner wheels, have in a preferred embodiment a perpendicular orientation with respect to the axis of rotation of the first spinner. In this manner, as the application of the second molten material is carried out repeatingly in sections along the peripheral direction of the spinner, maximum homogeneity of distribution of the layer of molten material on the outer surface of the peripheral wall is achieved. By dividing the overall amount of second molten material to be applied among several spinners, these spinners may furthermore be kept smaller and more lightweight.

Subclaims 10 to 12 concern advantageous developments or embodiments, respectively, of the device of the invention.

By the respective method or device of the invention, mineral wool fibers can be produced from at least two different molten materials to comprise a core made up of a first molten material and a coating or partial coating made up of a second molten material. As a first molten material a soft glass or a glas, e.g. a E-Glas can be used, such that the core has high flexibility. As the second molten material e.g. a hard glass such as basalt or rock melt can be used, such that a resistant coating or partial coating can be imparted to the bicomponent fiber.

In reversal of this concept is is, for example, also possible to use a hard glass such as basalt or a rock melt as the first molten material whereby a core e.g. having a high tensile strength can be produced. For the coating or partial coating, use may then be made for example of a soft glass or a glass of the E-glass type whereby a particularly smooth coating or partial coating would result. This coat might furthermore be softened again by re-heating to form additional points of contact with other fibers at locations of intersection, thereby creating the possibility of at least partly omitting the addition of binding agent.

By means of such bicomponent fibers a mineral wool product can moreover be produced which presents good homogeneity of distribution of the empty spaces enclosed in between the fibers and preferably filled with air as these bicomponent fibers also twist or curl irregularly during solidification due to the different coefficients of thermal expansion of the mineral molten materials. These bicomponent fibers have a variable radius of curvature along their longitudinal extension, with multiple reversals of their turning direction being possible.

The invention shall be explained in detail in the following description of embodiments by making reference to the drawings, wherein:
- **Fig. 1**: shows a schematically simplified sectional view of a device of the invention;
- **Fig. 2**: shows a schematically simplified cross-section of an embodiment of a spinner of the device of the invention according to Fig. 1; and
- **Fig. 3**: shows in another cross-section a schematic view of a second embodiment of the spinner of the device of the invention according to Fig. 1.

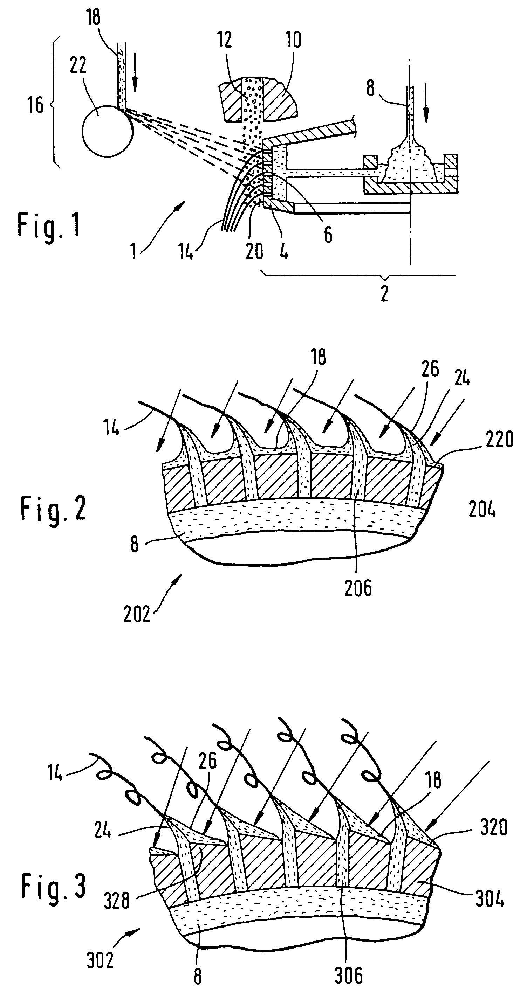

Fig. 1 is a schematic sectional view of part of a first embodiment of the device 1 of the invention. The device 1 for fiberising mineral molten materials in order to produce mineral fiber products comprises a first spinner 2 having a multiplicity of orifices 6 with small diameters provided in its peripheral wall 4. The first spinner 2 is supplied with a first mineral molten material 8 for centrifuging. The device 1 furthermore includes an external burner 10, e.g. an annular one, which most favorably has a coaxial arrangement, preferably above the spinner 2. The external burner 10 is used to furnish a hot gas flow for attenuating the fibers 14 to be produced. The device 1 moreover includes a means 16 for applying a second mineral molten material 18 onto the external surface 20 of the peripheral wall 4 of spinner 2.

In a preferred embodiment, the means 16 for applying the second mineral molten material 18 is at least one more, preferably annular spinner 22. This additional spinner 22 is in the represented embodiment arranged in a lateral position with respect to the first spinner 2 in order to centrifuge the second mineral molten material 18 from outside onto the external surface 20 of the peripheral wall 4 of the first spinner 2. In an embodiment not shown here the means 16 for applying the second mineral molten material 18 is formed in such a way that a plurality of further spinners 22, preferably annular ones, are positioned on an imaginary circle surrounding the first spinner 2, preferably at equal distances from each other, wherein the imaginary circle should have a coaxial position with respect to the axis of rotation of the first spinner 2.

In Figs. 2 and 3 the design of the peripheral wall 204 or 304, respectively, is represented in detail in enlargement not true to scale. As shown in Fig. 2, the peripheral wall 204 is designed such that the first molten material 8 upon emerging from the orifices 206 can be brought into contact with the second molten material 18 present on the peripheral wall 204 in the form of a thin layer of molten material, preferably can be conveyed through it. In this way, bicomponent fibers 14 can be produced to have a core 24 made up of the first molten material 8 and a coating 26 made up of the second molten material 18. In a preferred embodiment, the outer surface 220 of the peripheral wall 204 of the first spinner 202 has an approximate cylinder or frustum shape in the direction of axial extension.

Another embodiment is shown in Fig. 3. The outer surface 320 of the peripheral wall 304 thereof comprises a profile structure 328 which may be designed in such a way that the first molten material 8 can initally emerge from the orifices 306 without impediment by the second molten material 18. Subsequently the first molten material 8 can be brought into contact with the second molten material 18 at a small distance from the orifices 306 by way of the profile structure 328, the second molten material 18 being present on the outside of the profile structure 328 as a film of molten material deposited in sections. Thus in turn fibers 14 comprising a core 24 made up of the first molten material 8 and a coating 26 made up of the second molten material 18 might be produced, wherein the coating 26 of the bicomponent fiber 14 may encompass the core 24 in varying degrees from partially to completely, depending on the intended use. It is furthermore possible to design the profile structure 328 such that upon bringing the first molten material 8 into contact with the second molten material 18, fibers 14 are produced wherein the two molten materials are arranged in surface contact in two layers having any desired cross-sectional proportions.

In another embodiment of the spinner 302, the crosssection of profile structure 328 of the peripheral wall 304 resembles the profile of a triangle preferably having unequal side lengths and arranged between two neighboring orifices 306.

In order to produce mineral fibers 14 having high corrosion resistance and good flexibility e.g. a soft glass may be used as the first molten material 8. Apart from good flexibility of the fiber 14 this offers further advantages such as e.g. reduced spinner wear. As the second molten material 18, a hard glass such as e.g. mineral material obtained from rock melts or basalts may be utilised. These hard glasses impart good resistance against external chemical and thermal influences to the fiber 14.

## Claims

1. Method for producing mineral fibers, wherein a first mineral molten material (8) is supplied to a first spinner (2) having a multiplicity of orifices (6; 206; 306) with small diameters provided in its peripheral wall (4; 204; 304), centrifuged and subjected to an attenuating effect of a hot gas flow (12) generated by an external annular burner (10),
**characterised in that**
a second mineral molten material (18) is applied from the outside onto the external surface (20; 220; 320) of the peripheral wall (4; 204; 304) of said first spinner (2; 202; 302).

2. Method according to claim 1, characterised in that the application of said second molten material (18) is effected by centrifuging.

3. Method according to claim 1 or 2, characterised in that said first molten material (8) upon emerging from said orifices (6; 206; 306) is conveyed such as to penetrate through a layer of second molten material (18) present on the outer surface (20; 220; 320) of said peripheral wall (4; 204; 304).

4. Method according to any one of claims 1 to 3, characterised in that said first molten material (8) upon emerging from said orifices (6; 206; 306) is conveyed such that its emergence is not impeded by said second molten material (18) and it is brought into contact with said second molten material (18) only at a distance from the orifice.

5. Method according to any one of claims 1 to 4, characterised in that a soft glass is used as said first molten material (8).

6. Method according to any one of claims 1 to 5, characterised in that a hard glass is used as said second molten material (18).

7. Device for fiberising mineral molten materials for the production of mineral fiber products
comprising a first spinner (2) having a multiplicity of orifices (6; 206; 306) with small diameters in its peripheral wall (4; 204; 304) for centrifuging a first mineral molten material (8) supplied to said spinner (2; 202; 302),
and an annular external burner (10) in coaxial arrangement above said spinner (2; 202; 302) for generating a hot gas flow (12) for attenuating the fibers (14) to be produced,
**characterised in that**
a means (16) for applying a second mineral molten material (18) onto the external surface (20; 220; 320) of the peripheral wall (4; 204; 304) of said spinner is provided.

8. Device in accordance with claim 7, characterised in that said means (16) for applying said second mineral molten material (18) onto the external surface (20; 220; 320) of said peripheral wall (4; 204; 304) of said first spinner (2; 202; 302) has the form of at least one more, preferably annular spinner (22) arranged in a lateral position with respect to said first spinner (2; 202; 302) for applying said second mineral molten material (18) from the outside onto the external surface (20; 220; 320) of said peripheral wall (4; 204; 304) of said first spinner (2; 202; 302) by centrifuging.

9. Device in accordance with claim 8, characterised in that a plurality of additional, preferably annular spinners (22) are arranged in a circle surrounding said first spinner, preferably at equal distances from each other.

10. Device in accordance with any one of claims 7 to 9, characterised in that said peripheral wall (4; 204; 304) is designed such that said first molten material (8) upon emerging from said orifices (6; 206; 306) can be brought into contact with said second molten material (18) present on said peripheral wall (4; 204; 304), preferably conveyed through it, in order to produce fibers (14) comprising a core (24) made up of said first molten material (8) and a coating (26) made up of said second molten material (18).

11. Device in accordance with any one of claims 7 to 10, characterised in that said outer surface (20; 220; 320) of said peripheral wall (4; 204; 304) of said first spinner (2; 202; 302) is profiled such that said first molten material (8) can emerge from said orifices (6; 206; 306) without being impeded by said second molten material (18) and subsequently can be brought into contact with said second molten material (18) by means of said profile structure (328).

12. Device in accordance with claim 11, characterised in that said profile structure (328) of said peripheral wall (4; 204; 304) in cross-sectional view represents the profile of a triangle arranged between two neighboring orifices (6; 206; 306) and preferably having unequal side lengths.

13. Mineral fiber produced of at least two mineral molten materials in accordance with the method according to any one of claims 1 to 6.

14. Mineral fiber in accordance with claim 13, characterised by a core (24) produced from said first molten material (8) and a coating or partial coating (26) produced from said second molten material (18).

15. Mineral fiber in accordance with claim 13, characterised by a core (24) produced from said second molten material (18) and a coating or partial coating (26) produced from said first molten material (8).

16. Mineral fiber in accordance with any one of claims 13 to 15, characterised in that said core (24) consists of a soft glass or a glass and said coating (26) consists of a hard glass or a rock.

17. Mineral wool product of mineral fibers in accordance with any one of claims 13 to 16.
